# EUROPEAN PATENT APPLICATION

(11) **EP 4 552 815 A1**
(43) Date of publication of application: **14.05.2025**
(21) Application number: 24792939.1
(22) Date of filing: 12.04.2024
(51) Int. Cl.: B29B 17/02, B29C 48/00, C11D 1/72, C11D 3/22, C08L 23/06

(54) **METHOD FOR PREPARING RECYCLED POLYOLEFIN RESIN**

(30) Priority: 19.04.2023 KR 20230051538; 08.04.2024 KR 20240047361
(71) Applicant: LG Chem, Ltd., Yeongdeungpo-gu Seoul 07336 (KR)
(72) Inventor: KIM, Do Dam, Daejeon 34122 (KR); OH, Hyun Taek, Daejeon 34122 (KR); KIM, Jae Young, Daejeon 34122 (KR); HAN, Jung Jin, Daejeon 34122 (KR); NAM, Soo Ah, Daejeon 34122 (KR)
(74) Representative: Hoffmann Eitle
(86) International application number: PCT/KR2024/004895
(87) International publication number: WO 2024/219753

(57) **Abstract**

Provided is a method for preparing a recycled polyolefin resin including: adding a base resin including a polyolefin and a wash water to a washer equipped with a rotating member and washing the base resin in a wet friction manner by high-speed rotation of the rotating member; and supplying the washed base resin to an extruder to perform extrusion, wherein the wash water includes water, a nonionic surfactant, and chitosan.

According to the present invention, in the washing of the base resin, separation of foreign matter may be promoted by using a nonionic surfactant and reattachment of the separated foreign matter to the base resin may be prevented by using chitosan in combination, thereby improving an effect of removing foreign matter, and thus, a recycled polyolefin resin in which odor occurrence and deterioration of physical properties have been suppressed may be prepared.

## Description

### [Technical Field]

### CROSS-REFERENCE TO RELATED APPLICATIONS

The present application claims the benefit of priorities to Korean Patent Application No. 10-2023-0051538 filed on April 19, 2023 and Korean Patent Application No. 10-2024-0047361 filed on April 8, 2024, the entire contents of which are incorporated herein as a part of the specification.

### Technical Field

The present invention relates to a method for preparing a recycled polyolefin (PO) resin, and more particularly, to a method for preparing a recycled PO resin, which has an improved effect of removing foreign matter and odors.

### [Background Art]

Recently, since plastics having physical properties required for various uses and purposes have been developed, the use of plastics is increasing. In general, plastics use a lot of energy from crude oil collection to manufacturing, and a large amount of carbon is discharged in the process. Furthermore, when final products are discarded and plastics included in the products are also discarded, social costs for environmental pollution by the plastics and the treatment thereof are consumed. Thus, it is essential to recycle discarded plastics for reducing energy consumption, reducing carbon emission, and preventing environmental pollution. As such, plastics manufactured by recycling plastics discarded by a final consumer after use are referred to as a post-consumer recycled (PCR) resin, and attempts and efforts to obtain the PCR resin having desired purity and physical properties continue to be made.

Meanwhile, a polyolefin resin, which is a thermoplastic polymer prepared by polymerizing an olefin (hydrocarbon containing one double bond per one molecule) such as ethylene and propylene, shows different properties depending on density, and is being used as a raw material of various products based on its density. For example, when the density is high, plasticity, robustness, uniformity, and the like are shown and when the density is low, elasticity, transparency, flexibility, and the like are shown like a liquid or rubber, and thus, a high-density polyethylene (HDPE) is mainly used in products requiring high strength, a low-density polyethylene (LDPE) is mainly used in products requiring high transparency, and a linear low-density polyethylene (LLDPE) has excellent moldability and is mainly used in film production. Since the polyolefin resin is commercially widely used due to its inexpensive cost, it accounts for a significant portion of currently occurring waste plastics.

In general, a method for recycling waste plastics (resins) includes mechanical recycling, chemical recycling, and thermal recycling. The mechanical recycling is a method for preparing a resin product by grinding and sorting collected waste plastics and separating them by type, and mixing with a new material at a certain ratio or reinforcing with a functional additive when melting and pelletizing using an extruder. The chemical recycling is a method of extracting only a specific polymer from waste plastics using various chemical means, or recycling them as pure monomolecules and repolymerizing them. The thermal recycling is a method of burning waste plastics and recovering them as heat energy.

When foreign matter is included during a treatment of the waste polyolefin resin by the mechanical recycling, the foreign matter is oxidized in a melting process using an extruder to cause odors, and the physical properties may be deteriorated by the remaining foreign matter. For example, since an agricultural mulching film has high contents of various foreign matters such as dirt, straw, and paper and involves a fermentation process by microbial growth by its nature, an unknown odor may be caused during a pelletizing process. In addition, in the case of a stretch film made of a LLDPE material which is often used for packaging, paper foreign matter such as a courier label and other types of film foreign matter (e.g., PVC, PET, and the like) may often flow in. In particular, it is difficult to remove a cellulose component forming paper foreign matter, and when remaining cellulose flows into an extruder, it is oxidized due to a high temperature to cause an odor and also color change due to carbonization.

In general, when a post-consumer recycled (PCR) resin is produced by recycling waste plastics, washing is performed in a pretreatment process of preparing a raw material resin before being supplied to an extruder, that is, a base resin, but the effect is insignificant, and foreign matter and odors may become worse in a final product.

Thus, in order to produce a high value-added recycled resin, additional wet washing of the raw material resin is needed, and at this time, an additive which causes a chemical reaction to remove various contaminants may be used to improve a wash effect. The additive may be selected considering washing performance, activity against impurities, rinsability, price, and the like, and as a representative washing additive, a surfactant is being used.

The surfactant relaxes the boundary of an interface through a chemical structure having a hydrophobic group and a hydrophilic group, and is effective for separating contaminants on the surface by penetrating the hydrophobic group into the contaminants. The surfactant may be classified into anionic, cationic, amphoteric, and nonionic surfactants, depending on a charge of a hydrophilic portion when dissociating in water. Among them, a nonionic surfactant does not cause an ion repulsion force, which allows easy oil/water separation, and thus, may be appropriate for removing organic contaminants remaining in a resin which was used as an agricultural mulching film.

In addition, the surfactant may have properties varying with the deformation of a chemical structure, and among the nonionic surfactants, an EO/PO type formed of a block copolymer of ethylene oxide (EO) and propylene oxide (PO) may adjust a wash effect, rinsability, and foaming rates depending on temperature according to ratios of EO and PO which are repeated units.

When a base resin is added to water to which the nonionic surfactant as described above is added and washing by high-speed rotation of a rotating member is performed, foreign matter separated from the resin floats in water. Most of the separated foreign matter is a cellulose component, and relatively large floating foreign matter may naturally settle, but small foreign matter may maintain a suspension state in water and then be reattached to the resin. Thus, a bad odor and deterioration of physical properties may be caused in an extrusion step.

Therefore, there is a need for a technology of improving a wash effect by inducing settling of small floating foreign matter separated in a wet washing step of the base resin to prevent reattachment on the resin.

### [Disclosure]

### [Technical Problem]

The present invention is for solving the problems mentioned in the Background Art, and an object of the present invention is to provide a method for preparing a recycled polyolefin resin, which may prevent reattachment of foreign matter separated in a washing step of a raw material resin prepared by pretreating a waste polyolefin, thereby improving an effect of removing foreign matter and odors and suppressing deterioration of physical properties.

Another object of the present invention is to provide a recycled polyolefin resin including one or more selected from a nonionic surfactant, chitosan, and decomposition products thereof.

### [Technical Solution]

In one general aspect, a method for preparing a recycled polyolefin resin includes: adding a base resin including a polyolefin and a wash water to a washer equipped with a rotating member and washing the base resin in a wet friction manner by high-speed rotation of the rotating member; and supplying the washed base resin to an extruder to perform extrusion, wherein the wash water includes water, a nonionic surfactant, and chitosan.

### [Advantageous Effects]

According to the present invention, in the washing of the base resin obtained by pretreating a waste polyolefin resin, separation of foreign matter is promoted by using a nonionic surfactant and reattachment of the separated foreign matter to the base resin is prevented by using chitosan in combination, thereby improving an effect of removing foreign matter, and also, a recycled polyolefin resin from which an odor has been removed by an antibacterial action such as microbial growth suppression and the like unique to chitosan may be prepared.

In particular, the effect of removing foreign matter and odors may be maximized by adjusting a weight ratio of the nonionic surfactant and the chitosan to a range of 0.2:1 to 2:1, while using 100 to 150 ppm of the nonionic surfactant based on the total weight of the wash water.

### [Best Mode]

The terms and words used in the description and claims of the present invention are not to be construed limitedly as having general or dictionary meanings but are to be construed as having meanings and concepts meeting the technical ideas of the present invention, based on a principle that the inventors are able to appropriately define the concepts of terms in order to describe their own inventions in the best mode.

In the present invention, the polyolefin resin has a concept of collectively referring to not only a homopolymer, a copolymer, and/or a block (co)polymer including a monomer of ethylene and/or propylene but also a composition including these polymers.

Meanwhile, a base resin in the present disclosure is a polyolefin resin which has been separated and recovered from discarded products and then pretreated and may include impurities or foreign matter, and a resin prepared from the base resin by a method for preparing a recycled resin of the present invention is defined as a recycled polyolefin resin. Furthermore, a resin which is in a state of a mixture of a recycled resin and a new material for applying the recycled polyolefin resin to a product or in a state with an additive added for imparting desired physical properties is referred to as a post-consumer recycled (PCR) polyolefin resin.

Hereinafter, the present invention will be described in more detail for better understanding of the present invention.

A method for preparing a recycled polyolefin resin according to an exemplary embodiment may include washing a base resin and supplying the washed base resin to an extruder to perform extrusion.

The base resin may include a polyolefin resin which has been separated and recovered from discarded products and then pretreated.

The polyolefin resin includes a homopolymer, a copolymer, and/or a block (co)polymer including an ethylene and/or propylene monomer, and a representative example thereof includes polyethylene. The polyethylene is divided into a high-density polyethylene (HDPE), a medium-density polyethylene (MDPE), a low-density polyethylene (LDPE), a linear low-density polyethylene (LLDPE), an ultra-low-density polyethylene (VLDPE), and the like, according to the density, and is used after being appropriately selected depending on the properties of a product. In particular, since the low-density polyethylene (LDPE) resin, the linear low-density polyethylene (LLDPE) resin, or a mixture thereof having excellent transparency and moldability is effective for management of weeds, moisture, and temperature in soil, it has been used as an agricultural mulching film.

The polyolefin resin used in various products including the agricultural mulching film may be recovered from products discarded after use and recycled as a raw material of a post-consumer recycled (PCR) resin. In order to use the recovered waste polyolefin resin as a base resin which is the raw material of the PCR resin, the waste polyolefin resin should undergo a pretreatment process such as sorting, crushing, washing, and drying.

The sorting is a process of separating the waste polyolefin resin from discarded product and then classifying by material, size, and the like, and may use a method such as classification using wet or dry specific gravity, classification using a near-infrared spectroscope, and electrostatic separation using electrostatic properties. In the sorting process as such, foreign matter other than the resin, for example, a metal component or a fiber component may be first separated, and as large foreign matter in the waste resin is removed, an overall foreign matter content is decreased.

The sorted waste polyolefin resin may be crushed into a small size for smooth operation of a subsequent process. For example, the waste polyolefin resin may be added to a large capacity crusher equipped with a knife and cut into a uniform certain size, for example, a size of 60 mm or less. In addition, wash water may be supplied during crush of the waste polyolefin resin to perform wet crushing.

Since the crushed waste polyolefin resin is often contaminated or mixed with foreign matter such as chemicals, organic matter, sand, and stones, removal of the foreign matter is needed for a subsequent process. For example, the crushed waste polyolefin resin is added to washing equipment and perform a pre-wash using water.

The pre-wash may be performed in a centrifugation manner in which materials having a heavy specific gravity are removed by settling them down and materials floating on water are recovered. Thus, large foreign matter in the waste resin may be removed to decrease an overall foreign matter content.

Thereafter, the waste polyolefin resin from which foreign matter has been removed by the pre-wash as described above may be ground for granulation appropriate for supply to an extruder. For example, the waste polyolefin resin may be ground into flakes or particles (pellet or fine powder) having an appropriate size using a device such as a jaw crusher, an impact crusher, a cross jet mill, a roller mill, or a rod mill.

The waste polyolefin resin after the grinding may be flakes or particles having an average particle diameter of 4 to 10 mm, specifically 5 to 8 mm, and when the average particle diameter range is satisfied, a supply to an extruder in the subsequent process may proceed well.

The waste polyolefin resin after grinding may still contain some foreign matter. Therefore, in order to remove some fine foreign matter included in the waste resin in a ground state, equipment using for example, a magnetic force, a wind force, a centrifugal force, gravity, and the like may be used to separate and remove fine foreign matter. At this time, a wet method of supplying wash water may be applied.

The pretreatment process may be appropriately selected and modified as needed, and is not particularly limited as long as it may provide a base resin in an appropriate state to be supplied to an extruder.

The waste polyolefin resin after the pretreatment as such may be used as a base resin for producing a PCR resin.

Meanwhile, the base resin may still include a trace amount of foreign matter even after the pretreatment, and in particular, a resin recovered from an agricultural mulching film involves a fermentation process due to its nature and may cause an odor.

Thus, washing in a wet friction manner further proceeds on the base resin after the pretreatment. Specifically, washing may be performed by adding the base resin and the wash water to a washer equipped with a rotating member and rotating the rotating member at a high speed.

The wash water may include a nonionic surfactant and chitosan which are used as a washing enhancer with water.

In general, the surfactant relaxes the boundary of an interface through a chemical structure having a hydrophobic group and a hydrophilic group and is effective for separating contaminants on the surface by penetrating the hydrophobic group into the contaminants. In particular, a nonionic surfactant does not cause an ion repulsion force, which allows easy oil/water separation, and thus, may be favorably used for removing organic contaminants remaining in a resin which was used as an agricultural mulching film.

In an exemplary embodiment of the present invention, the nonionic surfactant may include a propylene oxide-ethylene oxide block copolymer.

More specifically, the propylene oxide (PO)-ethylene oxide (EO) block copolymer may be represented by a chemical formula of (EO)ₓ(PO)_{y}(EO)ₓ, in which polyoxyethylene at both ends forms a hydrophilic chain and polyoxyethylene in the center may be a nonionic triblock copolymer forming a hydrophobic chain. The molecular weight and the PO ratio of the copolymer may vary depending on x and y values of the chemical formula of (EO)ₓ(PO)_{y}(EO)ₓ, and in particular, the PO ratio is an element determining toxicity and solubility in application of the copolymer.

For example, the nonionic PO/EP block copolymer used in the present invention may have a weight average molecular weight in terms of polystyrene (hereinafter, referred to as "weight average molecular weight (Mw)") measured by gel permeation chromatography (GPC; using tetrahydrofuran as an elution solvent) of 9,000 to 15,000, specifically 11,000 to 13,000, and a ratio of propylene oxide (PO) of the copolymer of 20% to 40%, specifically 25% to 35% of the total molecular weight, and when the range is satisfied, low toxicity and high solubility are shown, and thus, it is effective for adjusting a wash effect, rinsability, and a foaming rate of the polyolefin base film. When the PO ratio of the PO/EO block copolymer is too high, hydrophobicity is highly shown and solubility in water becomes poor, so that it is difficult to obtain a sufficient wash effect.

The nonionic surfactant having the properties may effectively induce separation of foreign matter from the resin during wet friction washing of the polyolefin base resin even with the use of a very small amount. For example, the nonionic surfactant may be used at 50 to 200 ppm, preferably 100 to 150 ppm based on the total weight of the wash water and may show an excellent wash effect. When the content of the nonionic surfactant is less than 50 ppm, a wash enhancement effect may be insignificant. When the content is more than 200 ppm, excessive bubbles occur to cause difficulties in the process, a possibility of odor occurrence by oxidation itself may be increased, and the action of other additives which are used together may be hindered.

When the base resin is added to water to which the nonionic surfactant is added and washing by high-speed rotation of a rotating member is performed, foreign matter separated from the resin floats in water. Most of the separated foreign matter is a cellulose component, and relatively large floating foreign matter may naturally settle, but small foreign matter may maintain a suspension state in water and then be attached to the resin. Thus, a bad odor and deterioration of physical properties may be caused in the extrusion.

Thus, in the present invention, in order to prevent the foreign matter separated in the washing from floating in water and being reattached to the polyolefin base resin and improving an effect of removing odors, chitosan which is a natural polymer is used in combination with the nonionic surfactant.

In general, chitosan is a natural biopolymer having a linear polysaccharide structure formed of D-glucosamine and N-acetylglucosamine, and since it has functional groups such as a hydroxyl group and amine group, it is known to have antibacterial action, sterilizing action, and the like to bind to a cell membrane of microorganisms to inhibit growth of microorganisms. When the chitosan is used in washing of the waste polyolefin resin recovered from the agricultural mulching film, it may be effective for removing odors caused by the fermentation process of microorganisms.

In addition, since the chitosan is structurally similar to cellulose, it may aggregate with foreign matter separated from the resin in the washing. That is, since most of the foreign matter separated in wash water is a cellulose component, it has many hydroxyl groups on the surface, and various functional groups of chitosan form a bond to the hydroxyl group and aggregate, thereby settling down without floating in water. The foreign matter settling effect of the chitosan may be beneficial in removing paper foreign matter also when washing the waste polyolefin resin recovered from the stretch film used for packaging.

Meanwhile, though the chitosan may show hydrophilicity by many hydroxyl groups present on the surface, it forms a strong bond by a hydrogen bond with neighboring molecules, is not dissolved in water well, and shows a characteristic of being dissolved in dilute organic acids and inorganic acids. The solubility of the chitosan is inversely proportional to a molecular weight size. Therefore, when the chitosan is added to the wash water, it is favorable to select a molecular weight range for securing water solubility.

In this respect, the weight average molecular weight (Mw) of chitosan appropriate for use in the present invention may be in a range of 4,000 to 700,000, preferably 5,000 to 500,000, and more preferably 10,000 to 200,000. When the molecular weight of chitosan is more than 700,000, water solubility is very low, so that it is difficult to act as an additive for removing odors and foreign matter, and when it is less than 4,000, an aggregation and settling degree of foreign matter may be decreased.

As described above, since the chitosan used in the present invention is structurally similar to cellulose, it may aggregate with foreign matter separated from the resin in the washing. That is, since most of the foreign matter separated in wash water is a cellulose component, it has many hydroxyl groups on the surface, and various functional groups of chitosan form a bond to the hydroxyl group and aggregate, thereby settling down without floating in water. Therefore, foreign matter aggregated in the washer equipped with a rotating member may settle down and be easily removed, and clean wash water in the upper layer may be recovered and reused.

In an exemplary embodiment of the present invention, the chitosan may be used at 50 to 1,000 ppm or 100 to 1,000 ppm based on the total weight of the wash water. In addition, the chitosan may be directly added in a powder state to wash water, or added in a state of being dissolved in an acid solution such as acetic acid to wash water in order to increase water solubility.

Meanwhile, the chitosan may induce effective aggregation and settling of foreign matter when used at an appropriate combination ratio with the nonionic surfactant. When the chitosan is used alone as an additive in the washing of the base resin, chitosan has a reduced tendency to settle down even when being bonded to a cellulose component of foreign matter and forming aggregation, and is very likely to exist in a suspension state throughout the wash water, and thus, it is difficult to separate the aggregate of chitosan and foreign matter from the base resin and the foreign matter may flow into an extrusion process together.

For example, the weight ratio of the nonionic surfactant and the chitosan may be in a range of 0.05:1 to 4:1, preferably 0.2:1 to 2:1, and more preferably 1:1 to 2:1. In particular, when the nonionic surfactant is included at 100 to 150 ppm based on the total weight of the wash water and the weight ratio of the nonionic surfactant and the chitosan is 0.2:1 to 2:1, the effect of removing foreign matter and odors may be maximized.

When the nonionic surfactant is used in excessive of 4 times the chitosan, in severe cases, difficulties in the process are caused by bubbling, odors may occur by oxidation in the extrusion process due to the remaining nonionic surfactant, and foreign matter settling action of chitosan may be hindered. In particular, when the wash water is consistently used due to the reduced settling of foreign matter, a possibility of recontamination by unsettled foreign matters may be increased. However, when the content of chitosan is excessively increased as compared with the nonionic surfactant, the chitosan itself may act as foreign matter and impair the physical properties of a finally prepared recycled resin, and cause odors.

The use of the nonionic surfactant and the chitosan in combination may be applied even in the case of adding water in the pretreatment process of the waste polyolefin resin as well as the washing.

In an exemplary embodiment of the present invention, the washing may be performed by adjusting the temperature of the wash water to 30 to 50°C, for example, 40 to 45°C, and rotating the rotating member provided in the washer at 1000 to 2000 rpm, for example, 1200 to 1500 rpm for 1 to 5 minutes, for example, 2 to 3 minutes. When the temperature and the rotation speed range is satisfied, an effect of removing foreign matter/odors may be implemented while preventing damage to the polyolefin base resin.

If necessary, the wash water may further include a bleach, a bactericide, an antibacterial agent, a disinfectant, a dispersant, an oxidizing agent, a pH modifier, an antifoaming agent, and the like, for further enhancing the wash effect of the base resin. In particular, the antifoaming agent is for removing bubbles which may be produced from the nonionic surfactant, and an antifoaming agent such as silicon, mineral oil, and polymers may be used.

Thereafter, the polyolefin base resin washed by the process described above is supplied to an extruder and undergoes the extrusion, thereby preparing a recycled polyolefin resin.

The extruder has a function of melting, kneading, and extruding the base resin, and may be, for example, a twin-screw extruder. In addition, the extruder may include a supply port to which the base resin is supplied, an outlet positioned in the other end of the supply port, through which an extrudate is discharged, a cylinder in a housing of the extruder, in which the extrusion feed is extruded, a screw which is positioned inside the cylinder and pushes the extrusion feed or the extrudate in an outlet direction, and a heating device which is provided outside the cylinder and heats the cylinder.

A temperature inside the extruder may be 150°C to 260°C, specifically 190 to 230°C. In the case of the extruder having a cylinder inside the extruder housing, a temperature inside the extruder may refer to a temperature inside the cylinder. A temperature range inside the extruder as such is a melting point or higher and a deterioration temperature or lower of the polyolefin base resin. However, the temperature range is higher than an extrusion temperature for conventionally preparing the recycled polyolefin resin. When the polyolefin base resin stays for a long time in the extruder with the temperature range, the resin is prone to deterioration and discoloration by heat, which is directly related to the deterioration of the physical properties of the recycled resin. Therefore, when the temperature inside the extruder is maintained in a range of 150 to 260°C, it is important to shorten a residence time of an extrusion feed in the extruder to minimize a side effect from heat. For example, the residence time of the polyolefin base resin in the extruder may be 0.5 to 10 minutes, specifically 1 to 5 minutes.

Meanwhile, pressure inside the extruder according to an exemplary embodiment of the present invention may be a normal pressure to 100 bar or less. Within the pressure range, it is easy to control the temperature inside the extruder, and the melting and kneading of the polyolefin base resin may be preferably performed.

In an exemplary embodiment of the present invention, the extrusion composition discharged from the extruder is supplied to a pelletizer to perform pelletization. For example, the extrusion composition discharged through the outlet of the extruder is molded to a desired size by an underwater pelletizer, and finally, may be produced into the recycled polyolefin resin.

According to the present invention as described above, in the washing of the base resin obtained by pretreating a waste polyolefin resin, separation of foreign matter is promoted by using a nonionic surfactant and settling by aggregation of the separated foreign matter is induced by using chitosan in combination to prevent reattachment of the separated foreign matter to the base resin, thereby improving an effect of removing foreign matter, and also, a recycled polyolefin resin from which an odor has been removed by an antibacterial action such as microbial growth suppression and the like unique to chitosan may be prepared.

In particular, the effect of removing foreign matter and odors may be maximized by adjusting a weight ratio of the nonionic surfactant and the chitosan to a range of 0.2:1 to 2:1, while using 100 to 150 ppm of the nonionic surfactant based on the total weight of the wash water.

The recycled polyolefin resin prepared by the method may include one or more remaining selected from the nonionic surfactant and the chitosan which are used in the washing, and the decomposition product thereof.

For example, in the present invention, when 50 to 200 ppm of the nonionic surfactant and 50 to 1,000 ppm of chitosan are used in the washing of the base resin, the finally prepared recycled resin may include less than 25 ppm, for example, 4 to 21 ppm of the nonionic surfactant or the decomposition product thereof, or less than 100 ppm, for example, 4 to 99 ppm of the chitosan or the decomposition product thereof as residues.

Hereinafter, the present invention will be described in more detail by the examples. However, the following examples are provided for illustrating the present invention, and it is apparent to a person skilled in the art that various modifications and alterations may be made without departing from the scope and spirit of the present invention, and the scope of the present invention is not limited thereto.

### Example 1

A waste linear low-density polyethylene (LLDPE) resin recovered from an agricultural mulching film was pretreated by a process including sorting, crushing, prewashing, granulating, and classifying, and large foreign matter was separated and removed in the process and then grinding was performed to prepare a LLDPE base resin in a pellet form having an average particle diameter (D50) of 8 mm or less.

400 g of the base resin and 23 L of wash water (45°C) obtained by adding 100 ppm of Pluronic^{™} F127 (PF-127, Mw: about 12,500) having a PO-EO block copolymer structure as a nonionic surfactant and 100 ppm of chitosan (Mw: 120,000) to water were added to a washer equipped with a rotating member, and the rotating member was rotated at 1200 rpm to wash the base resin for 2 minutes. After the washing, the base resin and the wash water were recovered.

The washed base resin was supplied to a twin-screw extruder which included a cylinder having an inner diameter of 25 mm on the inside and has a screw length of 800 mm and melt kneading was performed. At this time, the internal temperature of the extruder was sequentially raised starting from 150°C in a hopper to 190°C in a die, and the rotation speed of the screw was set to 300 rpm and the residence time was controlled to 120 seconds. Thereafter, a composition discharged from the extruder was supplied to a pelletizer to prepare a LLDPE recycled resin having an average diameter of 2 mm.

### Comparative Example 1

A LLDPE recycled resin was prepared in the same manner as in Example 1, except that the base resin was not washed.

### Examples 2 to 23 and Comparative Examples 2 to 10

LLDPE recycled resins were prepared in the same manner as in Example 1, except that the types and the contents of the additives used in the wash water of the base resin were changed to those in Table 1.

**[Table 1a]**

| | Additives used in wash water (unit: ppm) | |
|---|---|---|
| Comparative Example 2 | - | - |
| Comparative Example 3 | Polyoxyethylene-oxypropylene glycol ether¹⁾ | 100 |
| | Dipropylene glycol n-butyl ether²⁾ | 25 |
| Comparative Example 4 | Lauryl dimethyl amine oxide³⁾ | 100 |
| | Dipropylene glycol n-butyl ether²⁾ | 25 |
| Comparative Example 5 | Polyoxyethylene-oxypropylene glycol ether¹⁾ | 100 |
| Comparative Example 6 | Lauryl dimethyl amine oxide³⁾ | 100 |
| Comparative Example 7 | DOWFOX 2A1⁴⁾ | 100 |
| Comparative Example 8 | PF-127 | 100 |
| Comparative Example 9 | Polyacrylamide (Mw: 5.000.000) | 100 |
| Comparative Example 10 | Chitosan (Mw: 120.000) | 100 |
| 1) Polyoxyethylene-oxypropylene glycol ether: EO-PO-based surfactant | | |
| 2) Dipropylene glycol n-butyl ether: a cleaning solvent used with a surfactant | | |
| 3) Lauryl dimethyl amine oxide: Amphoteric surfactant used in kitchen and residential cleaners | | |
| 4) DOWFOX 2A1 (Dow Chemical): anionic surfactant | | |

**[Table 1b]**

| | PF127 (ppm) | Chitosan | | | | | | | | | PE127/chitosan (weight ratio) |
|---|---|---|---|---|---|---|---|---|---|---|---|
| | | Weight average molecular weight (Mw) | | | | | | | | Concentr ation | |
| | | 4,000 | 7,000 | 10,000 | 120, 000 | 200, 000 | 300, 000 | 500,000 | 700,000 | ppm | |
| Example 1 | 100 | | | | 0 | | | | | 100 | 1.00 |
| Example 2 | 150 | | | | 0 | | | | | 500 | 0.30 |
| Example 3 | 100 | | | | 0 | | | | | 500 | 0.20 |
| Example 4 | 150 | | | | 0 | | | | | 100 | 1.50 |
| Example 5 | 100 | | | | 0 | | | | | 50 | 2.00 |
| Example 6 | 50 | | | | 0 | | | | | 50 | 1.00 |
| Example 7 | 200 | | | | 0 | | | | | 1000 | 0.20 |
| Example 8 | 50 | | | | 0 | | | | | 100 | 0.50 |
| Example 9 | 50 | | | | 0 | | | | | 500 | 0.10 |
| Example 10 | 50 | | | | 0 | | | | | 1000 | 0.05 |
| Example 11 | 100 | | | | 0 | | | | | 1000 | 0.10 |
| Example 12 | 150 | | | | 0 | | | | | 50 | 3.00 |
| Example 13 | 150 | | | | 0 | | | | | 1000 | 0.15 |
| Example 14 | 200 | | | | 0 | | | | | 50 | 4.00 |
| Example 15 | 200 | | | | 0 | | | | | 100 | 2.00 |
| Example 16 | 200 | | | | 0 | | | | | 500 | 0.40 |
| Example 17 | 100 | 0 | | | | | | | | 100 | 1.00 |
| Example 18 | 100 | | 0 | | | | | | | 100 | 1.00 |
| Example 19 | 100 | | | 0 | | | | | | 100 | 1.00 |
| Example 20 | 100 | | | | | 0 | | | | 100 | 1.00 |
| Example 21 | 100 | | | | | | 0 | | | 100 | 1.00 |
| Example 22 | 100 | | | | | | | 0 | | 100 | 1.00 |
| Example 23 | 100 | | | | | | | | 0 | 100 | 1.00 |

### Experimental Example 1: Evaluation of foreign matter and odors

Evaluation of foreign matter and odors of the regenerated resins prepared in the examples and the comparative examples was performed by the following method, and the results are shown in the following Table 2.

### <Evaluation of foreign matter - measurement of the number of film gels>

The prepared LLDPE regenerated resin was extruded using a separate extruder to prepare a film specimen having a thickness of 0.04 mm, and the number of gels in the film was counted using optical equipment (Q-film software, COLLIN). At this time, gels and fibers having a diameter of 100 µm or more in the prepared film specimen were regarded as gels and counted, and a foreign matter score of the film was calculated by giving gels having a diameter of 100 to 300 µm 0.3 points, giving gels having a diameter of 300 to 500 µm 0.5 points, and giving gels having a diameter of 500 µm or more 1 point.

### <Evaluation of odors>

The regenerated resins were provided to 50 panelists, and a score was given on a scale ranging from 0 to 5 points with a standard of "3"; the less odor the resin had, the closer the score was to "0". The average values of the scores given by the 50 panelists were calculated.

**[Table 2a]**

| | Evaluation of foreign matter | | | | | Evaluation of odor |
|---|---|---|---|---|---|---|
| | 200-300 µm | 300-400 µm | 400-500 µm | 500 µm∼ | Foreign matter score | |
| Comparative Example 1 | 2688 | 492 | 72 | 30 | 298.5 | 4.0 |
| Comparative Example 2 | 656 | 46 | 3 | 5 | 272.6 | 3.0 |
| Comparative Example 3 | 117 | 6 | 0 | 4 | 128.9 | 2.9 |
| Comparative Example 4 | 129 | 7 | 0 | 5 | 126.0 | 4.1 |
| Comparative Example 5 | 121 | 6 | 1 | 6 | 123.8 | 3.1 |
| Comparative Example 6 | 112 | 8 | 0 | 3 | 117.6 | 3.4 |
| Comparative Example 7 | 166 | 8 | 1 | 3 | 143.4 | 2.0 |
| Comparative Example 8 | 78 | 4 | 1 | 2 | 87.0 | 2.1 |
| Comparative Example 9 | 205 | 11 | 2 | 4 | 179.8 | 1.9 |
| Comparative Example 10 | 167 | 43 | 7 | 3 | 80.1 | 2.2 |

**[Table 2b]**

| | Evaluation of foreign matter | | | | | | Evaluation of odor |
|---|---|---|---|---|---|---|---|
| | 100-200 µm | 200-300 µm | 300-400 µm | 400-500 µm | 500 µm~ | Foreign matter score | |
| Example 1 | 804 | 36 | 4 | 1 | 1 | 25.5 | 1.2 |
| Example 2 | 1036 | 46 | 5 | 1 | 0 | 32.8 | 2.1 |
| Example 3 | 970 | 49 | 6 | 1 | 0 | 30.9 | 1.8 |
| Example 4 | 925 | 46 | 3 | 1 | 0 | 29.4 | 1.9 |
| Example 5 | 889 | 45 | 5 | 0 | 0 | 28.3 | 1.4 |
| Example 6 | 1771 | 123 | 14 | 5 | 2 | 58.0 | 3.1 |
| Example 7 | 1532 | 89 | 7 | 3 | 1 | 49.2 | 2.5 |
| Example 8 | 1994 | 151 | 34 | 8 | 2 | 66.7 | 3.6 |
| Example 9 | 2256 | 171 | 48 | 9 | 2 | 75.9 | 3.4 |
| Example 10 | 2462 | 215 | 59 | 10 | 3 | 84.1 | 3.3 |
| Example 11 | 1147 | 53 | 7 | 2 | 2 | 36.7 | 2.2 |
| Example 12 | 984 | 52 | 4 | 1 | 0 | 31.4 | 2.4 |
| Example 13 | 1021 | 54 | 5 | 2 | 0 | 32.6 | 2.7 |
| Example 14 | 1742 | 117 | 9 | 6 | 2 | 56.7 | 3.7 |
| Example 15 | 1699 | 103 | 8 | 6 | 1 | 54.9 | 3.4 |
| Example 16 | 1610 | 94 | 6 | 5 | 1 | 51.8 | 3.2 |
| Example 17 | 2987 | 254 | 78 | 10 | 3 | 101. 9 | 3.8 |
| Example 18 | 946 | 53 | 7 | 1 | 2 | 30.6 | 2.4 |
| Example 19 | 950 | 41 | 4 | 1 | 1 | 30.1 | 1.7 |
| Example 20 | 920 | 38 | 7 | 1 | 0 | 29.2 | 1.9 |
| Example 21 | 965 | 51 | 3 | 2 | 0 | 30.8 | 2.3 |
| Example 22 | 1520 | 39 | 10 | 3 | 2 | 47.6 | 3.1 |
| Example 23 | 2783 | 204 | 63 | 8 | 2 | 93.4 | 3.7 |

It was confirmed from Table 2 that Examples 1 to 23 which used wash water including 50 to 200 ppm of PF-127 as a nonionic surfactant and 50 to 1,000 ppm of chitosan having a molecular weight of 4,000 to 700,000 in washing the base resin obtained by a pretreatment of a waste polyolefin resin had a better effect of removing foreign matter than Comparative Example 1 which did not perform the washing or Comparative Examples 2 to 10 which did not use an additive or used wash water including other types of additives.

More specifically, in Examples 1 to 5, as a result of using 100 to 150 ppm of PF-127 while adjusting its combination ratio with chitosan (Mw 10,000 to 200,000) to 0.2:1 to 2:1, a significantly improved effect of removing foreign matter was shown and evaluation of odors was equivalent or better, as compared with Comparative Example 8 using PF-127 alone and Comparative Example 10 using chitosan (Mw 120,000) alone. In particular, Examples 1 to 5 had the lowest evaluation scores of foreign matter/odors by adjusting the combination ratio between PF-127 and chitosan (Mw 120,000) to 1:1 or 2:1.

In Examples 11 and 13, as a result of using 100 to 150 ppm of PF-127 while increasing the content of chitosan (Mw 120,000) to adjust the combination to 0.1:1 to 0.15:1, the foreign matter scores were similar to those of Examples 1 to 4, but the evaluation scores of odors were somewhat increased. Since chitosan was used in an excessive amount of 1,000 ppm, this is considered to be due to odor occurrence by oxidation of chitosan itself. Meanwhile, Example 12 using a decreased content of chitosan (Mw 120,000) had a somewhat increased evaluation score of odor.

In Examples 6, and 8 to 10, as a result of decreasing PF-127 to 50 ppm while changing the combination ratio with chitosan (Mw 120,000) to 0.01:1 to 1:1, the foreign matter scores and the evaluation scores of odor were somewhat increased as compared with Examples 1 to 4. The effect of separating foreign matter was decreased due to adding less PF-127, in which due to the insufficient use of PF-127, chitosan aggregated foreign matter did not induce settling and remained in a suspended state in wash water, resulting in worsening of separation of the base resin and the foreign matter.

In Examples 7, and 14 to 16, in which PF-127 was increased to 200 ppm while changing the combination ratio with chitosan (Mw 120,000) to 0.2:1 to 1:4 also, the foreign matter scores and the evaluation scores of odor were increased as compared with Examples 1 to 4. This is considered due to the fact that excessive PF-127 acted as foreign matter and self oxidation occurred to cause odors.

Meanwhile, in Examples 17 to 23 in which the molecular weight of chitosan was changed under the conditions of the combination ratio between PF-127 and chitosan of 1:1, it was confirmed that the effect of removing foreign matter and odors was excellent in a chitosan molecular weight in a range of 10,000 to 200,000.

As described above, the use of PF-127 and chitosan in combination in the polyolefin base resin improved the effect of removing foreign matter as compared with the case of using PF-127 alone, and when used in combination as such, even an additional effect of removing odors was excellent when the concentration of PF-127 was 100 to 150 ppm and the combination ratio between PF-127 and chitosan was 0.2:1 to 2:1 in the wash water.

### Experimental Example 2: Measurement of residual content of additive in regenerated resin

The residual contents of the components used as a washing additive of the regenerated resins prepared in the examples were analyzed by liquid chromatography-mass spectrometry (LC-MS).

### <Preparation of sample solution>

A solution of 1 g of the regenerated resin dissolved in xylene was added to ethanol and soaked, and a supernatant obtained by centrifugation was filtered to prepare a sample solution.

### <Preparation of standard solution>

- A PF-64 standard product and a PF-127 standard product as the nonionic surfactant were completely dissolved in acetonitrile or water, respectively, thereby preparing a standard solution.
- A chitosan standard product was dissolved in a 0.5% acetic acid aqueous solution to prepare a standard solution.

### <LC analysis conditions>

System: Waters HPLC
Column: C18 column (inner diameter of 4.6 mm × length of 50 mm, average size of silica particles: 3.0 µm)
Mobile phase: acetonitrile/H₂O (including 0.1% TFA), concentration gradient from 10/90 (v/v) to 100/0 (v/v)
Flow velocity: 1.0 ml/min
Column temperature: 40°C
Injection amount: 10 µl

### <MS analysis conditions>

SIM (selective ion monitoring mode)
PF-64: m/z=694, PF-127: m/z=801, chitosan: m/z=892

The area of the peaks corresponding to PF-127 and chitosan as additive components used in washing of the regenerated resin or the decomposition product thereof in HPLC/MS chromatogram obtained by the analysis was calculated, and then substituted into a calibration curve, thereby analyzing the residual content of the additive components included in the sample solution of 1 g of the regenerated resin, and the results are shown in the following Table 3:

**[Table 3]**

| | Amount of washing additive used | | Content of additive remaining in recycled resin | |
|---|---|---|---|---|
| | PF127 (ppm) | Chitosan (ppm) | PF127 (ppm) | Chitosan (ppm) |
| Example 1 | 100 | 100 | 8.00 | 9.00 |
| Example 2 | 150 | 500 | 13.00 | 47.00 |
| Example 3 | 100 | 500 | 9.00 | 45.00 |
| Example 4 | 150 | 100 | 16.00 | 8.00 |
| Example 5 | 100 | 50 | 10.00 | 3.00 |
| Example 6 | 50 | 50 | 6.00 | 4.00 |
| Example 7 | 200 | 1000 | 18.00 | 96.00 |
| Example 8 | 50 | 100 | 5.00 | 8.00 |
| Example 9 | 50 | 500 | 4.00 | 49.00 |
| Example 10 | 50 | 1000 | 5.00 | 99.00 |
| Example 11 | 100 | 1000 | 9.00 | 97.00 |
| Example 12 | 150 | 50 | 12.00 | 5.00 |
| Example 13 | 150 | 1000 | 17.00 | 95.00 |
| Example 14 | 200 | 50 | 21.00 | 4.00 |
| Example 15 | 200 | 100 | 18.00 | 11.00 |
| Example 16 | 200 | 500 | 20.00 | 48.00 |
| Example 17 | 100 | 100 | 9.00 | 7.00 |
| Example 18 | 100 | 100 | 10.00 | 9.00 |
| Example 19 | 100 | 100 | 13.00 | 12.00 |
| Example 20 | 100 | 100 | 6.00 | 11.00 |
| Example 21 | 100 | 100 | 7.00 | 8.00 |
| Example 22 | 100 | 100 | 9.00 | 7.00 |
| Example 23 | 100 | 100 | 10.00 | 8.00 |

It was confirmed from Table 3 that in the example of the present invention, as a result of using 50 to 200 ppm of PF-127 (nonionic surfactant) and 50 to 1,000 ppm of chitosan in the washing of the base resin, 4 to 21 ppm of the PF-127 component (including the decomposition product) and 4 to 99 ppm of the chitosan component (including the decomposition product) remained in the finally prepared regenerated resin. That is, PF-127 and chitosan remained at about 5% to 15% of the content used in the washing, respectively, in the final regenerated resin.

## Claims

1. A method for preparing a recycled polyolefin resin, the method comprising:
adding a base resin including a polyolefin and a wash water to a washer equipped with a rotating member and washing the base resin in a wet friction manner by high-speed rotation of the rotating member; and
supplying a washed base resin to an extruder to perform extrusion,
wherein the wash water includes water, a nonionic surfactant, and chitosan.

2. The method for preparing the recycled polyolefin resin of claim 1, wherein the nonionic surfactant comprises a propylene oxide-ethylene oxide block copolymer.

3. The method for preparing the recycled polyolefin resin of claim 2, wherein the propylene oxide (PO)-ethylene oxide (EO) block copolymer has a weight average molecular weight (Mw) of 9,000 to 15,000, and the propylene oxide (PO) accounts for 20% to 40% of a total molecular weight of the propylene oxide-ethylene oxide block copolymer.

4. The method for preparing the recycled polyolefin resin of claim 1, wherein the chitosan has a weight average molecular weight (Mw) of 4,000 to 700,000.

5. The method for preparing the recycled polyolefin resin of claim 4, wherein the chitosan has a weight average molecular weight (Mw) of 5,000 to 500,000.

6. The method for preparing the recycled polyolefin resin of claim 5, wherein the chitosan has a weight average molecular weight (Mw) of 10,000 to 200,000.

7. The method for preparing the recycled polyolefin resin of claim 1, wherein the nonionic surfactant is used in a range of 50 to 200 ppm based on the total weight of the wash water.

8. The method for preparing the recycled polyolefin resin of claim 1, wherein the chitosan is used in a range of 50 to 1,000 ppm based on the total weight of the wash water.

9. The method for preparing the recycled polyolefin resin of claim 1, wherein the nonionic surfactant and the chitosan is used in a weight ratio of 0.05:1 to 4:1.

10. The method for preparing the recycled polyolefin resin of claim 8 or 9,
wherein the nonionic surfactant is included at 100 to 150 ppm based on the total weight of the wash water, and
the nonionic surfactant and the chitosan is used in a weight ratio of 0.2:1 to 2:1.

11. The method for preparing the recycled polyolefin resin of claim 1, wherein the base resin is obtained by a pretreatment process including sorting, crushing, and prewashing.

12. The method for preparing the recycled polyolefin resin of claim 1, wherein the washing is performed under conditions of a temperature of 30 to 50°C and a speed of 1000 to 2000 rpm for 1 to 5 minutes.

13. The method for preparing the recycled polyolefin resin of claim 1, wherein the base resin is selected from a low-density polyethylene (LDPE) resin, a linear low-density polyethylene (LLDPE) resin, or a mixture thereof.

14. A recycled polyolefin resin comprising one or more selected from a nonionic surfactant, chitosan, and decomposition products thereof.

15. The recycled polyolefin resin of claim 14, wherein the nonionic surfactant or the decomposition product thereof is comprised in a range of 4 to 21 ppm based on the weight of the recycled polyolefin resin, and the chitosan or the decomposition product thereof is comprised in a range of 4 to 99 ppm based on the weight of the recycled polyolefin resin.
